# EUROPEAN PATENT APPLICATION

(11) **EP 4 198 348 A1**
(43) Date of publication of application: **21.06.2023**
(21) Application number: 22212083.4
(22) Date of filing: 07.12.2022
(51) Int. Cl.: F16H 9/18, F16H 9/16

(54) **VARIABLE SPEED DRIVE SYSTEM**

(30) Priority: 14.12.2021 US 202163265378 P
(71) Applicant: Agco Corporation, Duluth, Georgia 30096 (US)
(72) Inventor: O'Reilly, David, Hesston (US); Schrag, Steven, Hesston (US)
(74) Representative: AGCO Intellectual Property Department

(57) **Abstract**

A variable-speed belt drive apparatus includes a control sheave, a follower sheave and an intermediate sheave. The control sheave has a control belt channel for receiving a control belt. The follower sheave has a follower belt channel for receiving a follower belt. The intermediate sheave has an intermediate control belt channel for receiving the control belt and an intermediate follower belt channel for receiving the follower belt. A partition component is configured to adjust the width of the intermediate follower belt channel in response to a change in width of the intermediate control belt channel.

## Description

### FIELD

Embodiments of the present disclosure relate generally to a variable-speed belt drive system. In particular, embodiments of the present invention relate to a variable-speed belt drive system including a control sheave, a follower sheave and an intermediate sheave for coupling the control sheave to the follower sheave.

### BACKGROUND

Variable-speed belt drive systems generally include two sheaves and a belt arranged to transfer motion from one sheave to the other. One of the sheaves (the "driver" sheave) is mounted on a drive shaft, which is coupled to a motor. The other sheave (the "driven" sheave) is coupled to a driven shaft. When the motor causes the driver sheave to rotate, the belt acts to transfer movement from the driver sheave to the driven sheave. Such a variable-speed belt drive system includes two pulleys: a driver pulley formed by the belt and the driver sheave, and a driven pulley formed by the belt and the driven sheave. The speed ratio of the drive system is given by the ratio of the diameter of the belt at the driven sheave to the diameter of the belt at the driver sheave.

Each sheave is a wheel-shaped device comprising a channel for receiving the belt that extends around the wheel's circumference. The belt is tapered in cross section (e.g. V-shaped, trapezoidal) and the channel has a correspondingly tapered cross section. Each sheave comprises two sheave parts, which face each other along the rotation axis of the sheave. The channel is defined between the sheave portions, such that changing the axial separation of the sheave portions changes the width of the channel.

To vary the speed of the driven sheave, the speed ratio of the drive system is adjusted. This is achieved by controlling the axial separation of the sheave portions of one of the sheaves (the "control" sheave). When the sheave portions of the control sheave are pushed together, the belt is forced radially outwardly. Since the belt length and center distance between the shafts is fixed, the narrowing of the belt channel of the control sheave causes the belt to move radially inwardly within the belt channel of the other sheave (the "follower" sheave). Accordingly, the speed ratio is adjusted by adjusting the axial separation of the sheave portions.

However, the range over which the speed ratio can be adjusted is limited. The sheave portions can only be moved closer together until they are brought into contact. This limits the achievable range for the speed ratio of a variable-speed belt drive.

To address this, additional drives may be used in combination with the variable-speed belt drive increase overall speed range achievable by the system. For example, a variable-speed belt drive may be used to drive the rotor of a combine harvester. However, since the speed range provided by the variable-speed belt drive alone is insufficient, a two-speed gearbox is also provided.

It would therefore be desirable to increase the range of speed ratio achievable with a variable-speed belt drive.

### BRIEF SUMMARY

In an aspect of the invention there is provided a variable-speed belt drive apparatus, the apparatus comprising: a control sheave comprising a control belt channel for receiving a control belt; a follower sheave comprising a follower belt channel for receiving a follower belt; an intermediate sheave comprising an intermediate control belt channel for receiving the control belt and, an intermediate follower belt channel for receiving the follower belt and a partition component, wherein the partition component is configured to adjust the width of the intermediate follower belt channel in response to a change in width of the intermediate control belt channel.

In use, the intermediate sheave can be connected to the control sheave by the control belt. The intermediate sheave can also be connected to the follower sheave, by the follower belt. Accordingly, the apparatus includes two variable-speed belt drives coupled together by the intermediate sheave; one variable-speed belt drive is formed by the control sheave and the intermediate sheave, the other formed by the intermediate sheave and the follower sheave. When the width of the control belt channel is adjusted, the control belt moves within the channel thereby increasing/decreasing the diameter of the control belt at the control sheave and decreasing/increasing the diameter of the control belt at the intermediate sheave (corresponding to a wider/narrower control belt channel at the intermediate sheave). In response, the partition component acts to reduce/increase the width of the intermediate follower belt channel, causing the diameter of the follower belt to decrease/increase at the follower sheave. By providing the intermediate sheave, a broader speed ratio range can be achieved. That is, the range of achievable speed ratios associated with the apparatus is broader than would be achievable with a two-sheave belt drive system. As such, additional gear boxes previously required to achieve a desired ratio range may be eliminated, together with the associated manual shifting, cost, complexity and weight.

Furthermore, the drive apparatus allows for the control sheave and the follower sheave to rotate in the same direction. In some embodiments, this may offer a further significant advantage when compared to a single-belt arrangement because a reversal of direction from a driver shaft to a driven shaft can be avoided.

The intermediate sheave may comprise a first intermediate sheave part and a second intermediate sheave part arranged to face each other along a rotation axis: and the partition component may be arranged to be movable between the first intermediate sheave part and the second intermediate sheave part to adjust the widths of the intermediate control belt channel the intermediate follower belt channel.

By moving the partition component between the first intermediate sheave part and the second intermediate sheave part, the width of both the intermediate control belt channel and the intermediate follower belt channel are adjusted. In response to a change in width of the intermediate control belt channel, the partition component moves between the intermediate sheave parts to change the width of the intermediate follower belt channel.

The intermediate control belt channel may extend around the intermediate sheave and between the first intermediate sheave part and the partition component, the intermediate follower belt channel may extend around the intermediate sheave and between the second intermediate sheave part and the partition component.

To increase the width of the intermediate control belt channel, the partition component can be moved towards the second intermediate sheave part, thereby decreasing the width of the intermediate follower belt channel. Likewise, to reduce the width of the intermediate control belt channel, the partition component can be moved away from the second intermediate sheave part (and towards the first intermediate sheave part), thereby increasing the width of the intermediate follower belt channel.

The partition component may have a first inclined channel wall arranged to face an inner inclined wall of the first intermediate sheave part, such that the partition component and the first intermediate sheave part co-operate to define the intermediate control belt channel, wherein the intermediate control belt channel may taper inwardly.

The intermediate control belt channel may taper radially inwardly towards the rotation axis.

The partition component may have a second inclined channel wall arranged to face an inner inclined wall of the second intermediate sheave part, such that the partition component and the second intermediate sheave part co-operate to define the intermediate follower belt channel, wherein the intermediate follower belt channel tapers inwardly.

The intermediate follower belt channel may taper radially inwardly towards the rotation axis.

The intermediate sheave part may be arranged to rotate about a rotation axis, and the intermediate control belt channel may be radially offset from the intermediate follower belt channel.

The intermediate control belt channel may be radially offset from the intermediate follower belt channel in the radial direction. By providing a radial offset between the intermediate follower belt channel and the intermediate control belt channel, it is possible to control the output speed at the driven shaft. For example, if a low output speed is required at the driven shaft, the intermediate follower belt channel may be offset so as to be radially inward in relation intermediate control belt channel. Likewise, if a high output speed is required at the driven shaft, the intermediate follower belt channel may be offset so as to be radially outward of the intermediate control belt channel.

The first intermediate sheave part and the second intermediate sheave part may be fixed to a tubular portion for receiving a mounting shaft, and the partition component may be arranged to move axially between the first intermediate sheave part and the second intermediate sheave part along the tubular portion.

In use, the intermediate sheave may rotate about the mounting shaft.

The control sheave may comprise a first control sheave part and a second control sheave part, wherein the first control sheave part may be coupled to a hydraulic actuator arranged to move the first control sheave part relative to the second control sheave part.

The hydraulic actuator can be controlled to adjust the axial separation of the first and second control sheave parts, so as to change the width of the belt channel of the control sheave.

The control sheave may be a driver sheave coupled to a motor for rotating the driver sheave. The follower sheave may be a driven sheave.

The follower sheave may be a driven sheave comprising a first follower sheave part and a second follower sheave part, and the apparatus may comprise a biasing arranged to bias the first follower sheave part towards the second follower sheave part.

The apparatus may further comprise a control belt around the control sheave and the intermediate sheave and a follower belt around the follower sheave and the intermediate sheave. Accordingly, the control belt transfers motion of the control sheave to the intermediate sheave, which transfers motion to the follower sheave.

The control sheave may further comprise a driving belt channel for receiving a driving belt.

The apparatus may further comprise a mounting shaft and the intermediate sheave portion may be arranged to rotate about the mounting shaft.

The apparatus may further comprise a first bracket arranged to couple the control sheave and the follower sheave and a second bracket arranged to couple the first bracket to the intermediate sheave.

Each of the control sheave, the intermediate sheave and the follower sheave may comprise two ring-shaped bodies arranged to define a tapered channel.

Within the scope of this application it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

One or more embodiments of the invention / disclosure will now be described, by way of example only, with reference to the accompanying drawings, in which:
FIG. 1 is a simplified side view illustrating a variable-speed belt drive apparatus according to the present disclosure;
FIG. 2 illustrates an end view of the apparatus of FIG. 1;
FIG. 3 illustrates a cross-sectional view of the intermediate sheave of FIG.1;
FIG. 4 illustrates a cross sectional end-view of the apparatus of FIG.1; and
FIG. 5 illustrates a method of using the apparatus of FIG.1.

### DETAILED DESCRIPTION

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

This disclosure relates to a variable-speed belt drive apparatus. The apparatus comprises a variable-diameter control sheave, a variable-diameter follower sheave and a variable-diameter intermediate sheave. The control sheave, the follower sheave and the intermediate sheave are arranged such that the control sheave can be coupled to the follower sheave via the intermediate sheave. The control sheave can be coupled to the intermediate sheave by a control belt received in a control belt channel of the control sheave and a control belt channel of the intermediate sheave. The follower sheave can be coupled to the intermediate sheave by a follower belt received in follower belt channel of the follower sheave and an intermediate follower channel of the intermediate sheave. The intermediate sheave further comprises a partition component, which is configured to adjust the width of the intermediate follower belt channel in response to a change in width of the intermediate control belt channel.

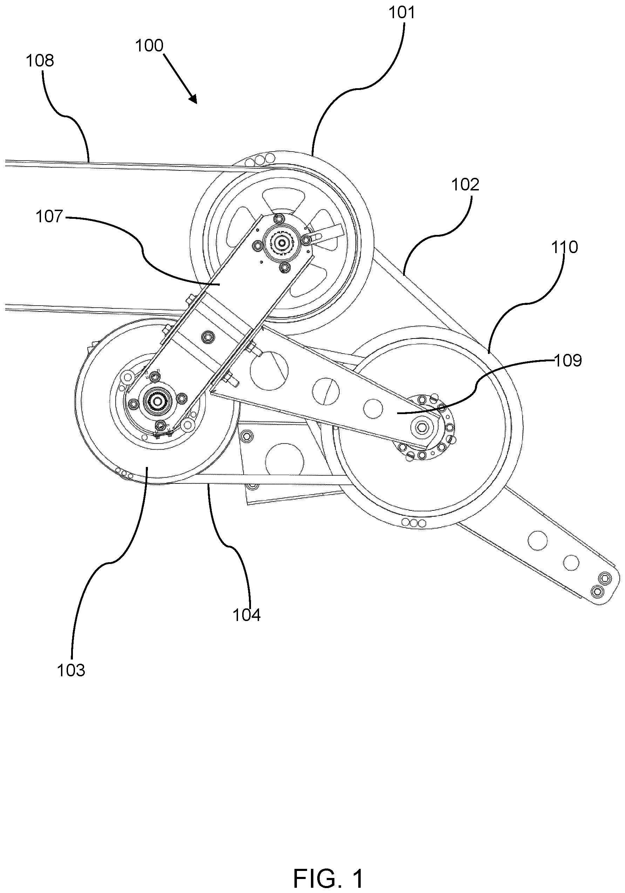

FIG. 1 illustrates a variable-speed belt drive apparatus 100 according to an embodiment of the invention. The apparatus 100 includes three variable-diameter sheaves 101, 103, 110. Each of the sheaves 101, 103, 110 has an annular shape and is arranged to rotate about its central axis. The sheaves are maintained in a fixed relationship with one another by brackets 107, 109.

The variable-diameter sheaves each comprise two sheave parts which are arranged to move together and apart to alter the effective diameter of a pulley formed by the sheave and a belt extending around the sheave. The sheave parts define a tapered belt channel between them, for receiving a V-shaped belt. When the sheave parts are moved closer together, the belt is forced radially outwardly. When the sheave parts are moved apart, the belt is free to move radially inwardly. Accordingly, the effective diameter of a pulley formed by the belt and the sheave is dependent on the axial separation of the sheave parts.

When two variable-diameter sheaves are coupled by a belt, two pulleys are formed. If the sheaves are maintained at a fixed distance from one another, adjusting the effective diameter of one pulley results in an adjusted effective diameter at the other pulley (because of the fixed belt length). In general, variable-speed belt drive systems include a control sheave and a follower sheave. The control sheave is coupled to an actuator for adjusting the axial separation of its two sheave parts. The follower sheave includes a biasing arrangement, for biasing its two sheave parts together. When the separation of the control sheave parts is adjusted, the belt either drives the follower sheave parts apart (by moving radially outwardly on the control sheave) or is free to move radially inwardly on the control sheave, such that the belt moves radially outwardly on the follower sheave allowing the follower sheave parts to move together.

In the apparatus of FIG. 1, the control sheave 101 is a driver sheave while the intermediate sheave and the follower sheave act as driven sheaves (they are rotated as a result of rotation of the control sheave 101). The follower sheave 103 can be coupled to a driven shaft, for outputting rotational motion.

The control sheave 101, intermediate sheave 110 and the follower sheave 103 are arranged such that when the control sheave 101 is driven to rotate (for example, by drive belt 108), movement of the control belt 102 causes the intermediate sheave 110 to rotate. Rotation of the intermediate sheave 110 causes the follower belt 104 to move around the intermediate sheave 110 and the follower sheave 103, causing the follower sheave 103 to rotate.

The speed ratio of the apparatus 100 is determined by the effective diameter of the pulley formed by the control belt 102 and the control sheave 101, the effective diameter of the pulley formed by the control belt 102 and the intermediate sheave 110, the effective diameter of the pulley formed by the follower belt 104 and the intermediate sheave 110, and the effective diameter of the pulley formed by the follower belt 104 and the follower sheave 103. The rotational speed of the follower sheave 103 is a function of the rotational speed of the control sheave 101, the diameter ratio of the control sheave and the intermediate sheave, and the diameter ratio of the intermediate sheave and the follower sheave. Accordingly, since it is possible to adjust the diameter ratio of the control sheave and the intermediate sheave and/or the diameter ratio of the intermediate sheave and the follower sheave, the arrangement can provide a relatively broad range of speed ratios. To vary the speed ratio, the effective diameter of the pulley formed by the control belt 102 and the control sheave 101 is adjusted. The control sheave 101 comprises two sheave portions arranged to face each other along the control sheave's rotation axis. The inner walls of the sheave portions are inclined; they define a tapered control belt channel for receiving the control belt 102 that tapers inwardly towards the rotation axis of the sheave. One of the sheave portions (a first control sheave portion) is fixed, and the other sheave portion (a second control sheave portion) is movable relative to the first control sheave portion, along the rotation axis. The width of the tapered control belt channel is adjusted by moving the second control sheave portion axially. The control belt 102 has a tapered cross section corresponding to the cross section of the control belt channel defined between the first and second control sheave portions. Accordingly, reducing the width of the control belt channel drives the control belt 102 radially outwardly. When the width of the control belt channel is increased, the control belt 102 is free to move radially inwardly.

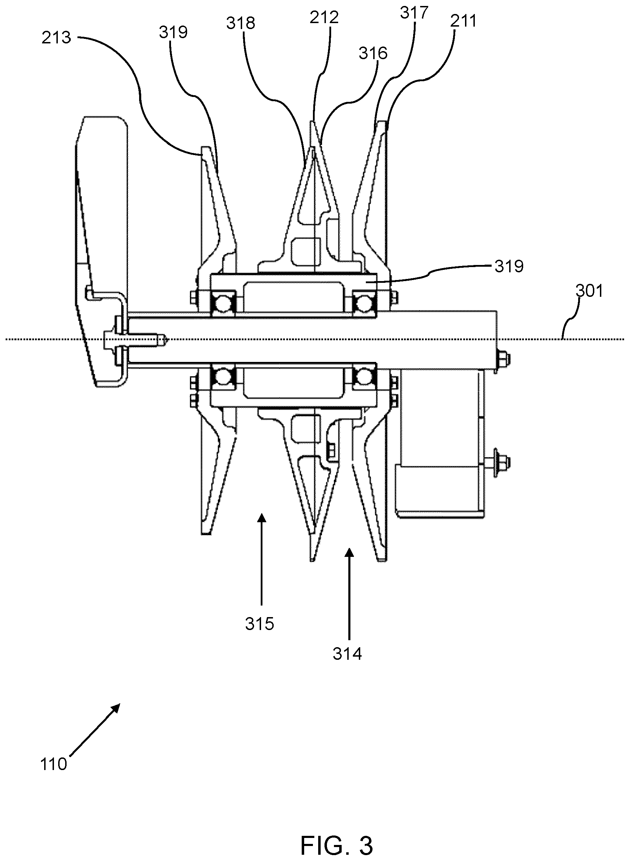

The intermediate sheave 110 has a similar structure. It comprises a first intermediate sheave part, a second intermediate sheave part and a control belt channel. However, the control belt channel of the intermediate sheave is formed between the partition component (see FIG. 3) and the first intermediate sheave part.

Changing the width of the control belt channel of the control sheave 101 also changes the radial position of the control belt within the control sheave. For example, if the width of the control belt channel is increased, the portion of the control belt received in the control belt channel of the control sheave moves radially inwardly. At the same time, the portion of the control belt received in the intermediate control belt channel is driven radially outwardly, allowing the walls of the intermediate belt channel to move closer together.

The first intermediate sheave part and the second intermediate sheave part of the intermediate sheave 110 are fixed relative to one another. The intermediate control belt channel is defined between an inclined inner wall of the first intermediate sheave part and an inclined channel wall of the partition component arranged between the first intermediate sheave part and the second intermediate sheave part. The partition component is arranged to be freely axially movable between the two intermediate sheave parts. Accordingly, when the control belt is moved in a radially outward direction, the partition component is driven towards the first intermediate sheave part.

This movement of the partition component acts to increase the width of the intermediate follower belt channel, which is defined between the partition component and the second intermediate sheave part. The widening of the follower belt channel drives the portion of the follower belt received in the intermediate follower belt channel radially inwardly.

The follower sheave 103 has a similar structure to the control sheave 101. It has a first follower sheave part, a second follower sheave part and a follower belt channel defined between the two follower sheave parts. The follower sheave 103 also comprises a biasing arrangement configured to bias the first follower sheave part towards the second follower sheave part along the axial direction (i.e. the follower sheave is biased to a configuration in which the follower belt channel is relatively narrow).

Biasing the follower sheave 103 to a configuration in which the follower belt channel is narrow also acts to bias the partition component of the intermediate sheave 110 towards the first intermediate sheave part (i.e. to bias the intermediate sheave 110 to a configuration in which the control belt channel is narrow). The bias is passed by the follower belt 104 to the intermediate sheave 110; as the follower belt is biased radially outwardly at the follower sheave, it is biased radially inwardly at the follower belt channel of intermediate sheave 110.

When the portion of the follower belt 104 in the intermediate follower belt channel moves radially inwardly (by widening the intermediate follower belt channel), the portion of the follower belt 104 received in the belt channel of the follower sheave 103 is driven radially outwardly, allowing the first follower sheave part to move towards the second follower sheave part. In this way, by using the control sheave 101 to vary the effective diameter of the pulley formed by the control belt 102 and the control sheave 101, it is possible to vary the effective diameter of the pulley formed by the control belt 102 and the intermediate sheave 110, the pulley formed by the follower belt 104 and the intermediate sheave 110, and the pulley formed by the follower belt 104 and the follower sheave 103.

With this arrangement, it is possible to vary the effective diameter at the follower sheave with greater flexibility. By coupling the control sheave 101 and the follower sheave 103 by the intermediate sheave 110, there are fewer limitations imposed on the effective diameter of the pulley formed with the follower sheave 103. Moreover, coupling of the control sheave 101 and the follower sheave 103 by the intermediate 110 sheave offers a broader range of speed ratios. Accordingly, the apparatus can achieve a broad range of speed ratios.

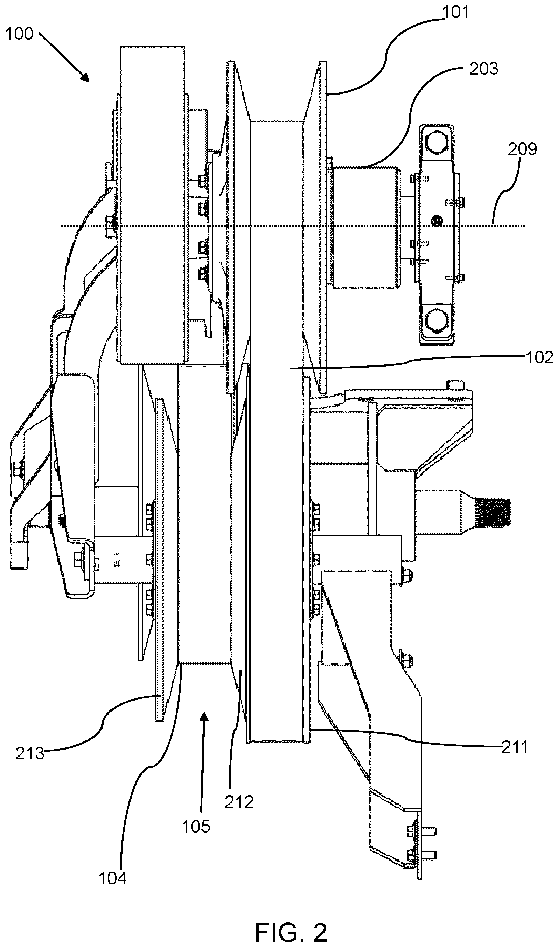

FIG. 2 shows an end view of the variable-speed belt drive apparatus 100 of FIG. 1. An actuator 203 is arranged to drive the first control sheave part to move axially, towards and away from the second control sheave part. The control belt 102 extends around the control sheave 101 and the intermediate sheave 110. A portion of the control belt 102 is received in the control sheave 101, within its control belt channel. A portion of the control belt 102 is received in the intermediate sheave 110, within the intermediate control belt channel. The first intermediate sheave part 211 and the second intermediate sheave part 213 are arranged opposite one another, and the partition component 212 is arranged between the two intermediate sheave parts 211, 213. The follower belt 104 is received between the partition component 212 and the second intermediate sheave part, within the intermediate follower belt channel 105.

FIG. 3 shows a cross-sectional view of the intermediate sheave 110. The intermediate sheave 110 comprises a spool arrangement, which is rotatable about a rotation axis 301. The first intermediate sheave part 211 and the second intermediate sheave part 213 are ring-shaped bodies coupled together by a tube 319 extending between them. The first intermediate sheave part 211 and the second intermediate sheave part 213 are fixed at opposite ends of the tube 319. The partition component 212, which is also a ring-shaped body, is arranged such that the tube 319 extends through its central aperture. The partition component 212 is arranged to "float" between the first intermediate sheave part 211 and the second intermediate sheave part 213. That is, it is free to move axially along tube 319, between the first and second intermediate sheave parts 212, 213.

The first intermediate sheave part 211 and the second intermediate sheave part 213 each have a respective inclined inner wall 317, 319 which extend around an outer annulus of the respective intermediate sheave part. The partition component 212 has a first inclined channel wall 316 and a second inclined channel wall 318.

The first inclined channel wall 316 forms a portion of a side of the partition component 212 facing the first intermediate sheave part 211. The first inclined channel wall 316 and the inclined inner wall 317 form a channel that tapers radially inwardly i.e. they form the intermediate control belt channel 314 of the intermediate sheave part 110.

The second inclined channel wall 318 forms a portion of a side of the partition component facing the first intermediate sheave part 213. The second inclined channel wall 318 and the inclined inner wall 319 form a channel that tapers radially inwardly i.e. they form the intermediate follower belt channel 315 of the intermediate sheave part 110.

As shown in FIG. 3, the first inclined channel wall 316, the first inclined inner wall 317, the second inclined channel wall 318 and the second inclined inner wall 319 are arranged such that the intermediate control belt channel 314 and the intermediate follower belt channel 315 are radially offset. By providing radially offset channels in this way (that is, with the intermediate follower belt channel radially inward of the intermediate control belt channel), the intermediate sheave can reduce the speed with which the follower sheave 103 rotates.

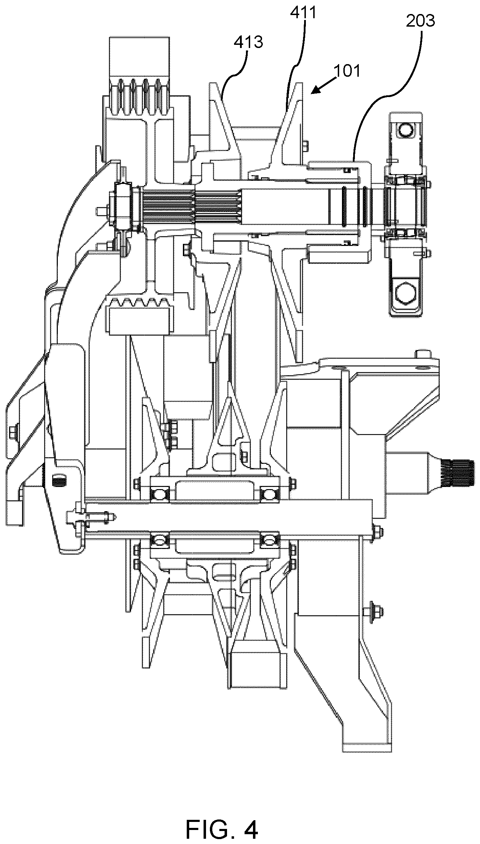

FIG. 4 shows a cross-sectional view of the apparatus 100. A hydraulic actuator 203 is arranged to move the first control sheave part 411 relative to the second control sheave part 413 to adjust the axial separation of the two control sheave parts 411, 413. In this way, the hydraulic actuator can be used to control the width of the control belt channel of the control sheave 101.

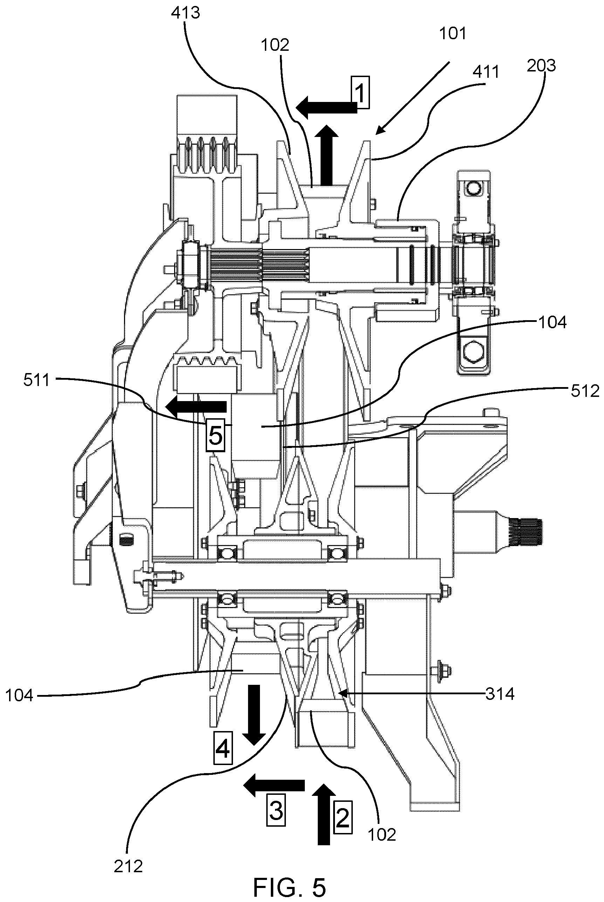

FIG. 5 illustrates a method of using the apparatus 100, with reference to the cross-sectional view of FIG. 4. First, at step "1" and as depicted by the horizontal arrow, the first control sheave part 411 is moved by the hydraulic actuator 203 towards the second control sheave part 413. This drives the portion of the control belt 102 received in the control belt channel radially outwardly (as depicted by the vertical arrow at step 1), so that the control belt 102 rides higher in the control belt channel of the control sheave 101.

The radially outward movement of the portion of the control belt 102 in the control belt channel of the control sheave 101 forces the portion of the control belt 102 at the intermediate sheave 110 radially inwardly. Accordingly, the portion of the control belt 102 in the intermediate control belt channel 314 is moved to ride lower in the intermediate control belt channel 314 (as depicted by the vertical arrow at step 2). As the control belt 102 moves to ride lower in the intermediate control belt channel 314, the partition component 212 is moved to the left (as depicted by the horizontal arrow at step 3) by the control belt 102 as it is forced lower in the intermediate control belt channel 314.

As the partition component 212 moves left, narrowing the intermediate follower belt channel 315, the follower belt 104 is forced to ride higher in intermediate follower belt channel 315. This movement of the follower belt 104 in the intermediate follower belt channel 315 forces the follower belt 104 to ride lower in the follower belt channel of the follower sheave 103.

The movement of the follower belt 104 in the follower belt channel of the follower sheave acts to drive the first follower sheave component 511 away from the second follower sheave component 512 to accommodate the new follower belt position. The first follower sheave component is spring loaded, to bias the first follower sheave component 511 towards the second follower sheave component 512.

It will be appreciated that variations to the above-described embodiment can be made without departing from the invention.

The control belt and/or the follower belt may have a V-shaped cross section, a trapezoidal cross section, or a different tapered cross-section.

Although the above-described embodiment refers to an arrangement in which the driver sheave is driven to rotate by a drive belt, in alternative embodiments the drive sheave coupled be coupled to a drive shaft and driven to rotate by a motor arranged to rotate the drive shaft.

Although the above-described embodiment refers to an arrangement in which the control belt channel of the intermediate sheave is offset from the follower belt channel of the intermediate sheave, it will be appreciated that the control belt channel and the follower belt channel need not be radially offset. In the above-described embodiment, the control belt channel of the intermediate sheave is arranged radially outwardly of the follower belt channel of the intermediate sheave, it will be appreciated that in other embodiments the follower belt channel of the intermediate sheave can be arranged radially outwardly of the control belt channel of the intermediate sheave.

## Claims

1. A variable-speed belt drive apparatus (100), the apparatus comprising:
a control sheave (101) comprising a control belt channel for receiving a control belt (102);
a follower sheave (103) comprising a follower belt channel for receiving a follower belt (104);
an intermediate sheave (110) comprising an intermediate control belt channel (314) for receiving the control belt (102) and, an intermediate follower belt channel (315) for receiving the follower belt (104) and a partition component (212), wherein the partition component (212) is configured to adjust the width of the intermediate follower belt channel (315) in response to a change in width of the intermediate control belt channel (314).

2. The apparatus of claim 1 wherein the intermediate sheave (110) comprises a first intermediate sheave part (211) and a second intermediate sheave part (213) arranged to face each other along a rotation axis: and
the partition component (212) is arranged to be movable between the first intermediate sheave part (211) and the second intermediate sheave part (213) to adjust the widths of the intermediate control belt channel (314) and the intermediate follower belt channel (315).

3. The apparatus of claim 2 wherein the intermediate control belt channel extends around the intermediate sheave and between the first intermediate sheave part and the partition component, the intermediate follower belt channel extends around the intermediate sheave and between the second intermediate sheave part and the partition component.

4. The apparatus of any preceding claim wherein the partition component has a first inclined channel wall arranged to face an inner inclined wall of the first intermediate sheave part, such that the partition component and the first intermediate sheave part co-operate to define the intermediate control belt channel, wherein the intermediate control belt channel tapers inwardly.

5. The apparatus of claim 4 wherein the partition component has a second inclined channel wall arranged to face an inner inclined wall of the second intermediate sheave part, such that the partition component and the second intermediate sheave part co-operate to define the intermediate follower belt channel, wherein the intermediate follower belt channel tapers inwardly.

6. The apparatus of any preceding claim wherein the intermediate sheave part is arranged to rotate about a rotation axis, and the intermediate control belt channel is radially offset from the intermediate follower belt channel.

7. The apparatus of any preceding claim wherein the first intermediate sheave part and the second intermediate sheave part are fixed to a tubular portion for receiving a mounting shaft, and the partition component is arranged to move axially between the first intermediate sheave part and the second intermediate sheave part along the tubular portion.

8. The apparatus of any preceding claim wherein the control sheave comprises a first control sheave part and a second control sheave part, wherein the first control sheave part is coupled to a hydraulic actuator arranged to move the first control sheave part relative to the second control sheave part.

9. The apparatus of any preceding claim wherein the control sheave is a driver sheave coupled to a motor for rotating the driver sheave.

10. The apparatus of any preceding claim wherein the follower sheave is a driven sheave comprising a first follower sheave part and a second follower sheave part (512), and the apparatus comprises a biasing arranged to bias the first follower sheave part towards the second follower sheave part.

11. The apparatus of any preceding claim further comprising a control belt around the control sheave and the intermediate sheave and a follower belt around the follower sheave and the intermediate sheave.

12. The apparatus of any preceding claim, wherein the control sheave further comprises a driving belt channel for receiving a driving belt.

13. The apparatus of any preceding claim further comprising a mounting shaft and wherein the intermediate sheave portion is arranged to rotate about the mounting shaft.

14. The apparatus of any preceding claim further comprising a first bracket arranged to couple the control sheave and the follower sheave and a second bracket arranged to couple the first bracket to the intermediate sheave.

15. The apparatus of any preceding claim wherein each of the control sheave, the intermediate sheave and the follower sheave comprises two ring-shaped bodies which are arranged to define a tapered channel.
